Europäisches Patentamt

European Patent Office

Office européen des brevets

(11) Publication number: **0 409 404 A2**

# EUROPEAN PATENT APPLICATION

(21) Application number: 90306498.8

(51) Int. Cl.⁵: **F16L  13/14**

(22) Date of filing: **14.06.90**

(30) Priority: **18.07.89 US 361602**

(43) Date of publication of application:
**23.01.91 Bulletin  91/04**

(84) Designated Contracting States:
**DE FR GB**

(71) Applicant: **GENERAL MOTORS CORPORATION**
**General Motors Building 3044 West Grand**
**Boulevard**
**Detroit Michigan 48202(US)**

(72) Inventor: **Goubeaux, Carl E.**
**1495 McKaig Avenue**
**Troy, Ohio 45273(US)**
Inventor: **Flory, Donald M.**
**3620 Arcanum-Bears Mill Road**
**Arcanum, Ohio 45304(US)**

(74) Representative: **Denton, Michael John et al**
**Patent Section Vauxhall Motors Limited 1st**
**Floor Gideon House 26 Chapel Street**
**Luton Bedfordshire LU1 2SE(GB)**

(54) High pressure tube atachment mechanism.

(57) Mechanism for attaching a high pressure tube (12) to an opening (28) in a housing (10) using a tapered opening into which the high pressure tube is inserted. A securing device (14) has one end (76) positioned about the tube end (42) and is then press fitted not only to the housing on an outer diameter fitting section (19) but also inwardly against the tube end, as well as another section (46) being press fitted to the housing to further secure the securing device to the housing, all of the press fits providing high pressure seals. The securing device other end (44) also has means (54) for prealignment of a cross passage (64) with a side passage (30) so that high pressure fluid flowing between the tube and the side passage has minimal directional change to pass from the cross passage to the side passage. The other end also has means (52) for receiving press fitting force in axial alignment with the securing device.

*Fig. 1.*

## HIGH PRESSURE TUBE ATTACHMENT MECHANISM

The present invention relates to high pressure tube attachment mechanisms, hereinafter for convenience, referred to as attachment mechanisms.

The attachment mechanism is for attaching one end of a tube to a housing which provides appropriate passages for conducting fluid under high pressure to and from the interior of the tube. The attachment mechanism comprises a securing device which fits about a tube end, and the securing device and the tube end are then press-fitted into a tapered opening in the housing so that the securing device is secured to both the housing and the tube, creating high pressure seal areas by the press-fitting action.

US patent nos. 4,799,715; 4,765,659; and 4,770,449 all show various press-fitted tube attachment mechanisms. The most pertinent is US patent No. 4,799,715, which discloses a closed end securing device of which the invention herein disclosed and claimed is a specific improvement.

A high pressure tube attachment mechanism in accordance with the present invention is characterised by the features specified in the characterising portion of Claim 1.

More specifically, the securing device of the invention is a closed end ferrule-like fitting. It has an bulbous-like enlarged section forming part of the closed end, with an annular recess between the enlarged section and a rounded head section. The rounded head section has a cross socket. The head section is adapted to receive an installation tool shaped to fit the rounded head and cross socket formed in it. The cross socket is perpendicular to a cross passage formed through a central section adjacent to the enlarged section on the axially opposite side thereof from the rounded head flange. The cross passage is a part of a passage which includes a lower passage section extending axially through the foot section of the securing device and opening through a reduced diameter passage section into the cross passage. The reduced diameter passage section has an inner shoulder which joins one end of that section with the adjacent end of the lower passage section. There is also an external shoulder formed on the central section in approximate lateral alignment with the inner shoulder. The foot section of the securing device is an annular wall in which the inner wall of the outer end of the lower passage section is conically tapered to provide a guide for receiving the tube to be attached into the lower passage section until the tube end is seated against the inner shoulder. The outer wall surface of the lower passage section is a right circular cylindrical wall surface.

The housing in which the securing device is press-fitted has a stepped passage formed therein comprising a first section having about a 2° taper so that its outer end is smaller in diameter than its inner end. The first section opens into the second section through a conical shoulder. The second section has a side passage intersecting it on one side thereof and axially spaced from the conical shoulder. The second section opens through a shoulder into the third section, which opens outwardly of the housing. The passage third section is diametrically larger than the head of the securing device. The second section is diametrically larger than the central section of the securing device but diametrically smaller than the bulbous-like enlarged section. The inner wall surface of the foot section is of a diameter so as to slide over the end of the tube to be attached. The wall surface of the first section at its end opening into the second section is slightly larger than the outer wall surface of the tube being attached so that the foot section of the securing device will fit slightly into the first section before the wall taper results in a wedging action with further axial movement of the securing device into the first section.

There is an annular space formed in the second section between the securing device and the second section side wall when the securing device is installed, so that the side passage is assured of being in fluid communication with the interior of the tube. It is preferable that the securing device be aligned so that the cross passage is in alignment with the opening of the side passage into the second section. By providing the head section with a cross socket, a mating tool can be used to be sure that the securing device is properly oriented before installation to achieve this alignment.

When the securing device is being installed, it is fitted over the end of the tube which is extending through the first section and at least well into the second section. The installation tool is fitted to the head section of the securing device with its cross bar received in the cross socket, the installation tool then being oriented until the cross passage of the securing device is aligned to open into the side passage. The installation tool then axially presses the securing device into the stepped passage, moving the tube with it as the tube end is in engagement with the inner shoulder, the foot section of the securing device entering the first section and the bulbous enlarged section entering the second section. Both the foot section and the bulbous enlarged section are press-fitted into their respective passage sections until the head section engages the shoulder separating the second and third sections. Further axial press-fitting movement of the securing device causes the part of the shoulder in axial surface engagement with the head section to be deformed into the recess between the enlarged bulbous section and the head section, self-staking the securing device in position. The tapered press-fit action between the foot section and the tapered wall of the first section tightly seals the securing device to the housing and also press-fits the securing device to the tube, retaining and sealing the tube relative to the securing device and the housing. The press-fit action of the bulbous enlarged section on the wall of the second section and the head section on the shoulder combine to provide two sealing points beyond the cross passage and also secures and retains the securing device in the housing. The external shoulder of the securing device on the central section does not normally engage the conical surface of the stepped passage. However, if for some reason the securing device is press-fitted much further into the passage, the external shoulder will engage the conical shoulder and a large increase in the press-fit force would be required to move the securing device further. Therefore it effectively provides a maximum installation position which assures that there is sufficient fluid flow between the interior of the tube and the side passage.

The present invention will now be described, by way of example, with reference to the accompanying drawings, in which:-

Figure 1 is a cross-section view with parts broken away, illustrating an embodiment of the invention, and shows the attachment mechanism in position before installation has commenced; and

Figure 2 is a similar view and shows the attachment mechanism after installation and the securing action has been completed.

The attachment mechanism of the present invention includes a housing 10, a tube 12 to be securely attached to the housing, and a securing device 14. Securing device 14 is a closed end ferrule-like fitting. The tube 12 may be a spring tube such as that disclosed and claimed in US Patent No. 4,754,604.

Housing 10 has a stepped passage 16 formed therethrough. Stepped passage 16 has a first section 18; a conical shoulder 20; a second section 22 of larger diameter than first section 18 and connected with the first section 18 by the conical shoulder 20; a shoulder 24; and a third section 26 opening at 28 to the exterior of the housing 10. The third section 26 has a side wall surface 29. The first section 18 has a side wall surface 19 which is tapered with about a $2°$ taper, illustrated in exaggerated form by angle A, with the larger diameter end of the first section 18 being the one that opens into the second section 22 via conical shoulder 20. A side passage 30 opens at 32 through a side wall surface 34 of the second section 22. Opening 32 is preferably spaced from, but adjacent to, the conical shoulder 20. Side passage 30 conducts high pressure fluid from stepped passage 16 to a suitable chamber such as in a hydraulic power booster of a vehicle brake system.

Tube 12 has a circular cross-section, and has an inner wall surface 36 defining the tube interior 38, an outer wall surface 40, and a tube end 42. The outer diameter of tube 12 is smaller than the minimum diameter of the first section 18 of stepped passage 16.

The securing device 14 has a closed end head formed by head section 44 and a bulbous enlarged section 46. Head section 44 includes a base flange 48 connected to head section 46 by an annular, outwardly opening recess 50. Outer side surface 49 of base flange 48 is larger in diameter than the maximum diameter of bulbous enlarged section 46. The head section 44 further includes a frusto-conical head surface 52 extending axially from base flange 48. A driver socket 54 is formed in the top of frusto-conical head surface 52. Driver socket 54 is preferably a cross channel having its axis 56 passing through the longitudinal axis 58 of securing device 14 and perpendicular thereto. The cross channel is illustrated as having a semi-circular cross section, but other appropriate shapes may be employed.

The bulbous enlarged section 46 is illustrated as being shaped somewhat like the outer peripheral surface of a torus in that, as seen in axial cross section, its surface 60 is arcuately formed. The maximum diameter of bulbous enlarged section 46 is greater than the diameter of the second section 22 of stepped passage 16, and its minimum diameter, at either axial end, is less than the diameter of the third section 26 of stepped passage 16.

Securing device 14 has a central section 62 joining bulbous enlarged section 46 on the axial end thereof opposite head section 44. Central section 62 has an outer side wall surface 63 and a cross passage 64 extending therethrough. The cross passage 64 has ends 66 and 68 opening through the outer side wall surface 63 of central section 62.

The lower part of central section 62 has a passage section 70 extending therethrough axially of the securing device 14. An internal shoulder 72 is on the lower side of central section 62, and passage section 70 opens through that internal shoulder as well as opening through the wall of cross passage 64. Passage section 70 and cross passage 64 define passage means. An external shoulder 74 is formed on the lower outer part of central section 62. Central section 62 is smaller in diameter than the diameter of the second section 22 of stepped passage 16.

Securing device 14 has a foot section 76 which extends axially from central section 62. Foot section 76 is tubular, with one end terminating at internal shoulder 72 and the other end 78 being the lower end of the securing device. Foot section 76 has an inner wall surface 80 (which defines an axially extending bore) and an outer wall surface 82. The foot section 76 is preferably of constant outer diameter, with the inner wall surface 80 also being cylindrical, but with a taper 84 provide at the other end 78. The inner wall surface 80 is preferably a close fit with the outer wall surface 40 of tube 12. The width of internal shoulder 72, defined by the smaller diameter of passage section 70 and the larger diameter of inner wall surface 80, is preferably substantially equal to the radial thickness of the tube 12 between its inner wall surface 36 and its outer wall surface 40. The outer wall surface 82 of foot section 76 is a close sliding fit with the opening of the first section 18 of stepped passage 16 into the conical shoulder 20. The outer wall surface 82 will fit with axial movement slightly into the first section 18 before the taper of the side wall surface 19 of the first section results in a wedging action.

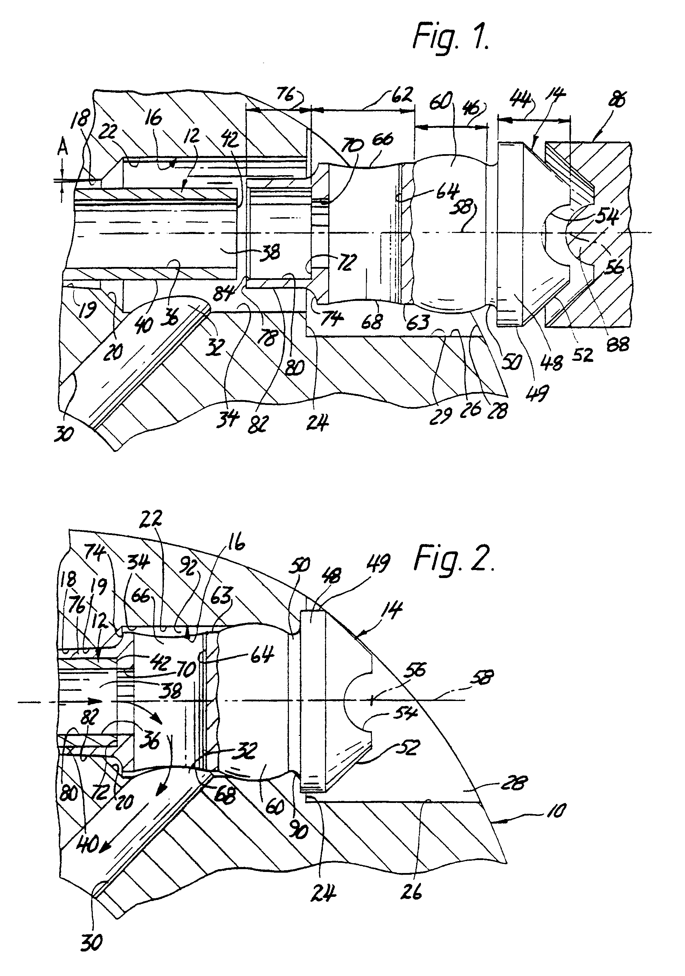

When the securing device 14 is being installed, tube 12 has its tube end 42 extending into stepped passage 16 at least as far as slightly beyond the opening 32. The foot section 76 of the securing device 14 is fitted over the tube end 42, the tube end being received through the inner wall surface 80 until the tube end 42 engages internal shoulder 72. An installation tool 86 is somewhat schematically shown in the drawing but has the capability of fitting the head section 44 of the securing device 14, rotating to drive the securing device into a desired position and exerting controlled axially applied force to press the securing device into place in the housing 10. The frusto-conical mating portions of the installation tool 86 and the frusto-conical head surface 52 of the securing device 14, together with the cross passage 64 and cross drive member 88 of the installation tool, assure the axial direction of the press fitting force applied to the securing device. If the installation tool 86 is not already in place, it is placed over the head section 42 so that the cross drive member 88 fits in cross passage 54. If the securing device 14 is misaligned such that cross passage 64 will not be aligned with opening 32, the installation tool 86 and the securing device are rotated until that position is attained. When automatic installation equipment is used, this preorientation of the securing device 14 is normally completed as a part of the loading of the securing device into the installation equipment. The installation tool 86 then forces the securing device 14 axially in a press-fit operation. As the installation tool 86 and securing device 14 are moved axially into the stepped passage 16, the tube end 42 is moved in the same direction, and the other end 78 of foot section 76 enters the first section 18 of stepped passage 16. Conical shoulder 20 will assist in guiding this part of the operation as may be necessary. Further axial movement results in a press-fit of the foot section 76 into the first section 18, and at the same time a press-fit of the foot section 76 to the portion of the tube 12 which is within the foot section. Both of these press-fits provide seals. The bulbous enlarged section 46 of the securing device 14 also enters the second section 22 of the stepped passage 16 and slightly deforms the side wall surface 34. This is another press-fit seal. When the base flange 48 engages the shoulder 24, slight further press-fitting axial movement of the securing device 14 causes a part 90 of the shoulder 24 to be displaced into the outwardly opening recess 50, as is seen in Figure 2, further securing the securing device 14 in place. This also provides a press-fit seal in the area of the outwardly opening recess 50 as well as the press-fit seal having been provided around bulbous enlarged section 46.

Upon the completion of the press-fit installation the securing device 14 is located in the housing 10 and the tube 12 is tightly secured to the housing by the securing device as is shown in Figure 2. Cross passage 64 has its ends 66 and 68 opening into an annular space 92 formed between the central section 62 and the side wall surface 34 of the second section 22 of stepped passage 16. End 68 is also in alignment with the opening 32 of side passage 30 so that flow from the tube interior 38 can easily flow into the side passage 30 through cross passage 64.

If for some reason press-fitting force were to continue to be applied, securing device 14 would move axially only a small distance further before external shoulder 74 engages the conical shoulder 20, greatly increasing the resistance to the applied force. With force sensing limiters, the installation tool 86 would cease to exert the press-fitting force, the securing device 14 would still be in a satisfactory operating position, and would be securely installed so as not to leak or release the tube under high pressures such as are to be found in hydraulic brake boosters, for example.

## Claims

1. A high pressure tube attachment mechanism comprising a housing (10) having a stepped passage (16g therein through which fluid under pressure may flow, the stepped passage having a first section (18), and a second section (22) of larger diameter than the first section and connected thereto by a conical shoulder (20); a tube (12) for the flow of fluid therethrough and having an open end (42) extending axially through the first section of the stepped passage, the outer diameter of the tube being less than the minimum diameter of the stepped passage; and a securing device (14) securable in the stepped passage and comprising a foot section (76), a central section (62), an enlarged section (46), and a head section (44) which are integrally formed and which extend axially, the foot section and the central section being adjacent one another and each having a maximum outer diameter which is less than the diameter of the second section of the stepped passage, the enlarged section and the head section being adjacent one another and each having a maximum outer diameter which is greater than the diameter of the second section, the central section being adjacent the enlarged section, an outwardly opening recess (50) formed in the securing device between the enlarged section and the head section and having a reduced diameter, an axially extending bore (80) through the foot section, passage means (64,70) in the central section opening into the axially extending bore and the stepped passage, and an internal shoulder (72) formed between the axially extending bore and the passage means, the open end of the tube being slidably received in the axially extending bore and abutting the internal shoulder, the enlarged section extending into the second section of the stepped bore to form a fluid-tight seal between the enlarged section and the housing, and the head section engaging the housing to deform a part (90) thereof into the outwardly opening recess to stake the securing device to the housing, characterised in that the first section (18) of the stepped passage (16) is conically tapered with about a two degree taper which decreases in diameter away from the conical shoulder (20); the foot section (76) extending into the first section (18) of the stepped passage (16) and being inwardly compressed thereby to grip and secure the tube (12) in the stepped passage and to form a fluid-tight seal between the tube and the housing (10).

2. A high pressure tube attachment mechanism as claimed in claim 1 in which the head section (44) of the securing device (14) includes a frusto-conical head surface (52) having a socket (54) in the top thereof, the frusto-conical head surface and the socket being adapted to receive a mating installation tool (86) for rotatably locating the securing device (14) relative to the housing (10) at a predetermined relative location and for then exerting a press fitting pressure axially on the securing device to install the tube and securing device in the housing.

3. A high pressure tube attachment mechanism as claimed in Claim 1 or Claim 2, in which the passage means in the central section (62) of the securing device (14) comprises a passage section (70) which extends axially and which opens into the axially extending bore (80), and a cross passage (64) which extends normally to the passage section and opens into the passage section and the second section (22) of the stepped passage (16).

4. A high pressure tube attachment mechanism as claimed in any one of Claims 1 to 3, in which a side passage (30) extends through the housing (10) and opens into the second section (22) of the stepped passage (16).

5. A high pressure tube attachment mechanism as claimed in any one of Claims 1 to 4, in which an external shoulder (74) is formed on the securing device (14) between the foot section (76) and the central section (62) for engaging the conical shoulder (20) in the stepped passage (16) to prevent overinsertion of the securing device.

6. A high pressure tube attachment mechanism as claimed in any one of Claims 1 to 5, in which the foot section (76) of the securing device (14) has an outer wall section (82) of constant diameter.

7. A high pressure tube attachment mechanism as claimed in any one of Claims 1 to 6, in which the enlarged section (46) of the securing device (14) has a bulbous outer surface.

*Fig. 1.*

*Fig. 2.*